# EUROPEAN PATENT SPECIFICATION

(11) **EP 2 729 681 B1**
(45) Date of publication and mention of the grant of the patent: **28.11.2018**
(21) Application number: 12807298.0
(22) Date of filing: 02.07.2012
(51) Int. Cl.: F01N 13/18, F16J 15/08, F16L 27/12, F16L 27/10

(54) **CONNECTION BETWEEN TWO PIPES IN A PIPELINE**
VERBINDUNG ZWISCHEN ZWEI ROHREN IN EINER ROHRLEITUNG
RACCORD ENTRE DEUX TUYAUX DE PIPELINE

(30) Priority: 07.07.2011 SE 1150640
(43) Date of publication of application: 14.05.2014
(73) Proprietor: Scania CV AB, 151 87 Södertälje (SE)
(72) Inventor: BOMAN, Joakim, S-151 38 Södertälje (SE)
(74) Representative: Scania CV AB
(86) International application number: PCT/SE2012/050758
(87) International publication number: WO 2013/006132

(56) References cited:
- EP-A1- 0 949 409
- DE-A1- 19 646 883
- DE-C1- 4 028 225
- FR-A1- 2 288 266
- FR-A1- 2 394 007
- US-A- 5 784 881
- US-A1- 2008 012 296
- US-A1- 2010 230 956

## Description

### BACKGROUND TO THE INVENTION AND PRIOR ART

The present invention relates to a connection between two pipes in a pipeline according to the preamble of claim 1.

Exhaust lines which lead exhaust gases out from combustion engines in vehicles comprise usually a plurality of pipes and tubular components. A known practice for preventing leakage at a connection between two adjoining pipes in an exhaust line is to provide one of the pipes with an annular seal which abuts against a sealing surface of the other pipe. During operation of the engine, pipes in the exhaust line are subject to thermal stresses. To prevent their being deformed by these stresses, the pipes are usually provided with wearing surfaces to ensure that it is possible for the pipes to undergo mutual movements in an axial direction at the connection. After a certain period of use, however, the pipes' wearing surfaces which are initially quite smooth usually suffer wear and tear and therefore become uneven.

On occasions when pipes in the exhaust line are disassembled, their wearing surfaces are moved out of mutual engagement, causing the wearing surface of the first pipe to move past the seal on the second pipe. If the wearing surface is uneven and rough, there is risk of damage to the seal. If the seal sustains tears or similar damage, the result will be exhaust leakage at the connection between the pipes. On occasions when the pipes are reassembled, the wearing surface moves in an opposite direction past the seal, with risk of further damage to the seal. It is therefore not sufficient to change the seal, as the pipe with the wearing surface also needs changing, otherwise the wearing surface might damage the new seal when the pipes are being reassembled. The second pipe is usually also changed. Changing both of the pipes and the seal at a connection each time pipes are disassembled results in large consumption of pipes and seals. The cost of disassembling pipes with wearing surfaces in an exhaust line thus becomes relative high.

FR 2288266 A1 shows a connection for a fuel line where a male pipe end is inserted between two coaxial walls in a female pipe end. Sealing for the pipe connection is provided by two seals on outside and one seal on the inside of the male pipe end.

DE 4028225 C1 shows a pipe connection for an exhaust pipe. Sealing between the male and the female pipe ends is provided by two piston rings arranged in male pipe and a graphite sealing ring 4 resting against a shoulder on the inner portion.

FR 2394007 A1 shows a pipe connection where a seal attached to a male pipe end fills the and seals the gap between the male and a female pipe end. The male pipe end is provided with inward pointing lugs that keeps decreases the axial play between the two pipe portions.

### SUMMARY OF THE INVENTION

The object of the present invention is to propose a connection of the kind mentioned in the introduction whereby it is possible to disassemble and reassemble the respective components without causing any obvious risk of leakage at the reassembled connection.

These objects are achieved with the device of the kind mentioned in the introduction which is characterised by the features indicated in the characterising part of claim 1. The connection is provided with a wearing region which allows mutual movements between the connecting portions of the pipes. This mobility substantially prevents the occurrence of thermal stresses at the connection between the adjoining pipes when they undergo temperature variations. Over time, the surfaces of the wearing region become more or less rough. To achieve a tight connection between the pipes, the connection is provided with a sealing region. For a good seal between the surfaces of the sealing region it is very important that the sealing surfaces be undamaged. The wearing region is at a radial distance from a centreline through the connection which differs from the radial distance from the sealing region to the centreline. According to the invention, the wearing region is at a greater radial distance from the centreline than the radial distance from the sealing region to the centreline. When pipes of the kind mentioned in the introduction are being disassembled, they are moved in a substantially axial direction relative to one another. As the wearing region is at a greater radial distance from the centreline than the radial distance from the sealing region to the centreline, the regions do not come into mutual contact during disassembly. The risk of the surfaces of the sealing region being damaged by the wearing region's rough surfaces during disassembly and subsequent reassembly is thus substantially completely eliminated. It is therefore possible to disassemble and reassemble the respective components at the connection without causing any obvious risk of leakage at the reassembled connection. The pipes have with advantage a circular cross-sectional shape but may have substantially any desired functional shape. The term "pipe" is here to be construed in a broad sense. The connection may be made between two components each provided with a tubular portion at the region where the connection is effected.

According to the present invention, the sealing region comprises a sealing surface of the first connecting portion and a seal means situated on the second connecting portion, which sealing surface and seal means are adapted to being in mutual contact when the connecting portions are in the connected state. The seal means abuts with advantage with a resilient force against the sealing surface of the first connecting portion. For the sealing region to be able to create a tight connection between the pipes, neither the seal means nor the sealing surface may have tears or other kinds of surface damage. The sealing surface faces inwards and the seal means has a surface facing radially outwards and adapted to being in contact with the sealing surface when the connecting portions are in the connected state. The radially external surfaces of the seal means abut here with advantage with a resilient force against the sealing surfaces of the first connecting portion.

According to the present invention, the wearing region comprises a first wearing surface of the first connecting portion and a second wearing surface of the second connecting portion which are adapted to being in mutual contact when the connecting portions are in the connected state. The shape of the wearing surfaces is such as to allow mobility between the connecting portions when they undergo thermal stresses. The first wearing surface and the second wearing surface are with advantage so configured as to allow a certain mutual mobility between the pipes in an axial direction when the connecting portions are in a connected state, making it possible for changes in the lengths of the pipes to be absorbed at the connection.

According to another preferred embodiment of the present invention, the first wearing surface faces radially inwards and the second wearing surface radially outwards. The first connecting portion serves here as a radially external element of the connection which encloses the second connecting portion. The wearing surfaces here take the form of cylindrical surfaces with an axial extent which defines a maximum linear movement between the pipes at the connection.

According to another preferred embodiment of the present invention, the seal means is a sealing ring made of metal material. Where the pipes convey a gaseous or liquid medium at a high temperature, the seal means has to be made of heat-tolerant material. This makes it appropriate for the seal means to be made of metal material with suitable characteristics. The connection is with advantage between two pipes in an exhaust line. Pipes in exhaust lines are subject to great thermal stresses. These pipes are usually provided with wearing surfaces to allow mutual movements between the pipes. Such pipes typically form part of exhaust manifolds and turbo manifolds.

### BRIEF DESCRIPTION OF THE DRAWINGS

Preferred embodiments of the invention are described below by way of examples with reference to the attached drawings, in which
- Fig. 1: depicts a connection in an exhaust line according to a first embodiment of the invention,
- Fig. 2: depicts the connection in Fig. 1 in more detail,
- Fig. 3: depicts a connection in an exhaust line according to a second example not covered by the claims , and

- Fig. 4: depicts the connection in Fig. 3 in more detail.

### DETAILED DESCRIPTION OF PREFERRED EMBODIMENTS OF THE INVENTION

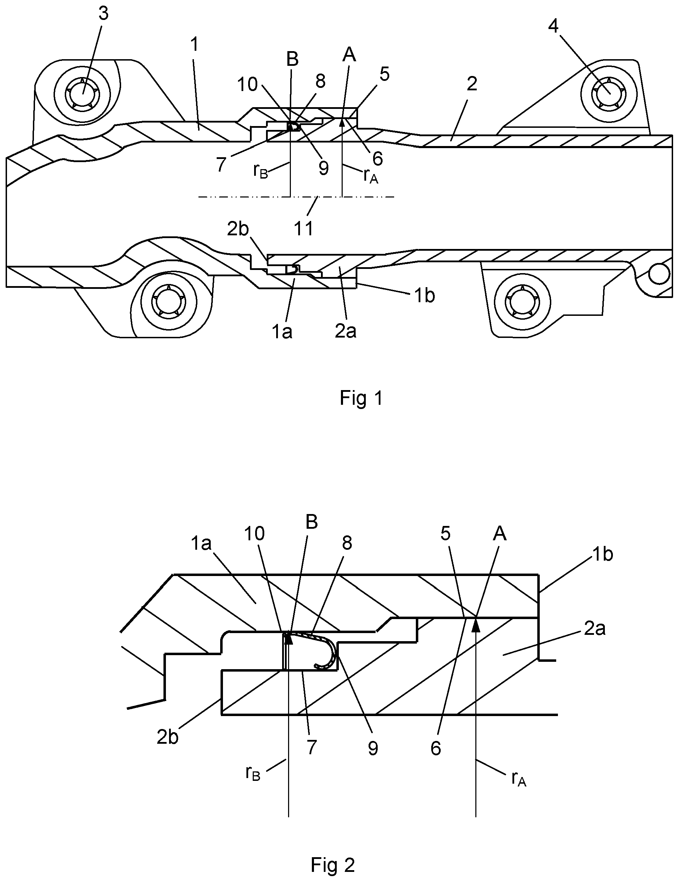

Figs. 1 and 2 depict a connection between a first pipe 1 and a second pipe 2 in an exhaust line which leads exhaust gases out from a combustion engine. The first pipe 1 may be an exhaust manifold and the second pipe 2 a turbo manifold. The first pipe 1 usually has an external connecting portion 1a which is pushed onto an internal connecting portion 2a of the second pipe 2 to achieve a connected state. The first pipe 1 has stationary fastening by means of a number of fastening means 3 which may be bolts. The second pipe 2 has stationary fastening by means of a number of fastening means 4 which may likewise be bolts. During operation of the engine, the pipes 1, 2 in the exhaust line for exhaust gases are subject to varying temperatures. The exhaust gases in a diesel engine may be at a temperature of up to about 600-700°C. To prevent the pipes from being deformed by the thermal load from the exhaust gases, the connecting portion 1a of the first pipe is provided with an internal wearing surface 5. The connecting portion 2a of the second pipe is provided with an external wearing surface 6 adapted to being in contact with the first pipe's wearing surface 5 when the pipes 1, 2 are in a connected state. The two wearing surfaces 5, 6 provide assurance that the first pipe 1 and the second pipe 2 can undergo changes in length and move in an axial direction relative to one another in response to variation in the temperature of the exhaust gases in the exhaust line. The pipes' wearing surfaces 5, 6 are initially smooth but over a period of use they inevitably suffer wear and tear such that they may become uneven and rough.

The second pipe's connecting portion 2a has an end surface 2b and a bearing surface 7 which faces radially outwards and is adapted to accommodating and supporting an annular seal means 8. In this embodiment the second pipe's wearing surface 6 is at a greater distance from the end surface 2a than the distance which the bearing surface 7 is from the end surface 2a. The second pipe's connecting portion 2a comprises also a radial stop surface 9 which defines an intended fitting position for the seal means 8 on the bearing surface 7. The seal means 8 is made of material which tolerates the high temperatures which occur in the exhaust line. The seal means 8 may be made of suitable metal material. The first pipe's connecting portion 1a has an end surface 1b and a sealing surface 10 which faces radially inwards and which is adapted to coming into contact with the seal means 8 when the pipes 1, 2 are in a connected state. The first pipe's sealing surface 10 is at a greater distance from the first pipe's end surface 1b than the wearing surface 5 is from the end surface 1b. The first pipe's wearing surface 5 and the second pipe's wearing surface 6 form a wearing region A between the pipes 1, 2 when they are in a connected state. The first pipe's wearing surface 5, the second pipe's wearing surface 6 and the wearing region A are at a radial distance r_{A} from a centreline 11 of the connection. The first pipe's sealing surface 10 and the seal means 8 form a sealing region B between the pipes 1, 2. The first pipe's sealing surface 10, the seal means 8 and the wearing region B are at a radial distance r_{B} from the centreline 11 of the connection. In this embodiment, the wearing region A is at a greater radial distance r_{A} from the centreline 11 than the radial distance r_{B} from the sealing region B to the centreline 11.

The object of the present invention is to prevent the wearing surfaces 5, 6 from causing tears or other damage to the seal means 8 or the sealing surface 10 when the pipes are being disassembled and reassembled. On occasions when the first pipe 1 and the second pipe 2 are being disassembled, connecting means 3, 4 of at least one of the pipes 1, 2 are released. The first pipe 1 and the second pipe 2 are then moved in an axial direction away from one another. To prevent damage to the seal means 8, it must not come into contact with the first pipe's wearing surface 5 during disassembly. To prevent damage to the first pipe's sealing surface 10, it must not come into contact with the second pipe's wearing surface 6 during disassembly. As in this embodiment the first pipe's sealing surface 10 and the second pipe's wearing surface 6 are so arranged that they need not pass one another when the pipes 1, 2 are being disassembled and reassembled, there is no risk of the sealing surface 10 being damaged by the second pipe's wearing surface 6. However, the first pipe's wearing surface 5 will pass the seal means 8 when the pipes 1, 2 are being disassembled and reassembled. To prevent its coming into contact with the seal means 8 in this situation, the first pipe's wearing surface 5 is at a greater radial distance r_{A} from the centreline 11 than the radial distance r_{B} from the seal means 8 to the centreline 11. When the pipes 1, 2 are being disassembled and reassembled, the first pipe's wearing surface 5 thus passes at a distance from the seal means 8 which is defined by the difference between said radial distances r_{A}, r_{B}. The risk of the first pipe's wearing surface 5 damaging or tearing the seal means 8 when the pipes are being disassembled or reassembled is thus substantially eliminated.

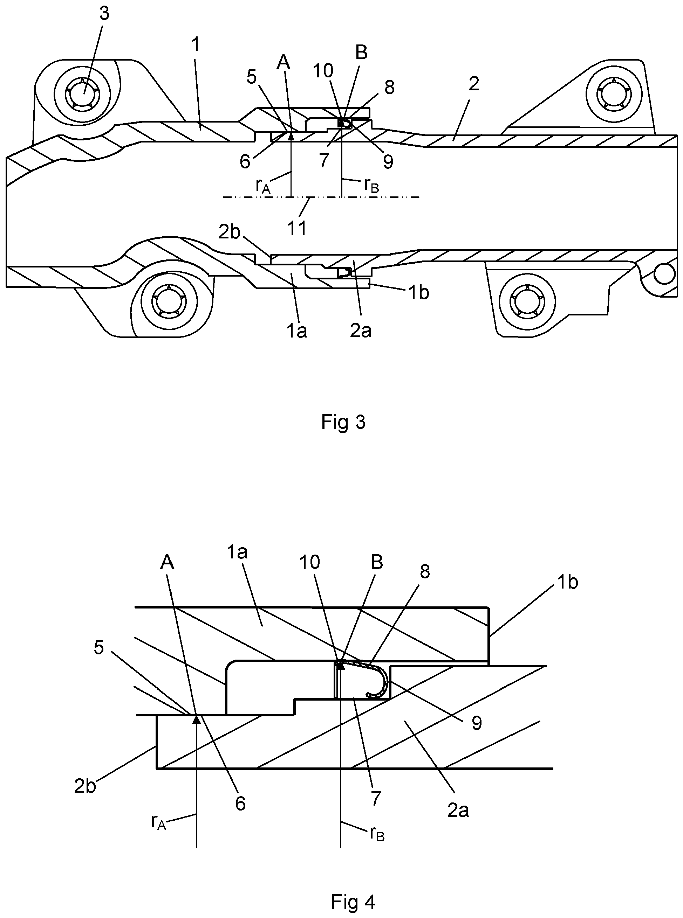

Figs. 3 and 4 depict an alternative connection between the first pipe 1 and the second pipe 2 not covered by the claims. Here again the first pipe 1 has a wearing surface 5 facing inwards and adapted to coming into contact with a wearing surface 6 facing outwards on the second pipe 2 when the pipes 1, 2 are in a connected state. The second pipe 2 has a bearing surface 7 facing radially outwards which accommodates and supports an annular seal means 8.
The second pipe 2 has a radial stop surface 9 which defines an intended fitting position for the seal means 8 on the bearing surface 7. When the pipes 1, 2 are in the connected state, the first pipe's wearing surface 5 and the second pipe's wearing surface 6 form a wearing region A which is at a radial distance r_{A} from a centreline 11 of the connection. The first pipe's sealing surface 10 and the seal means 8 form a sealing region B which is at a radial distance r_{B} from the centreline at the connection. In this embodiment the wearing region A is at a smaller radial distance r_{A} from the centreline 11 than the radial distance r_{B} from the sealing region B to the centreline 11.
On occasions when the first pipe 1 and the second pipe 2 are being disassembled, connecting means 3, 4 of at least one of the pipes 1, 2 are released. The first pipe 1 and the second pipe 2 are then moved in an axial direction away from one another. The object of the invention is therefore to prevent the occurrence of tears or other types of damage to the seal means 8 or the sealing surface 10 when the pipes are being disassembled and reassembled. To achieve this, the first pipe's wearing surface 5 must not come into contact with the seal means 8 when the pipes are being disassembled. Nor may the second pipe's wearing surface 6 come into contact with the first pipe's sealing surface 10. As in this embodiment the seal means 8 and the first pipe's wearing surface 5 are so arranged that they need not pass one another when the pipes 1, 2 are being disassembled, there is no risk of the seal means 8 being damaged by the first pipe's wearing surface 5. However, the second pipe's wearing surface 6 will pass the first pipe's sealing surface 10 when the pipes 1, 2 are being disassembled. To prevent its coming into contact with the first pipe's sealing surface 10, the second pipe's wearing surface 6 is at a smaller radial distance r_{A} from the centreline 11 than the radial distance r_{B} from the first pipe's sealing surface 10 to the centreline 11. In this case, when the pipes 1, 2 are being disassembled and reassembled, the first pipe's sealing surface 10 passes at a distance from the second pipe's wearing surface 6 which is defined by the difference between the radial distances r_{A}, r_{B}. The risk of the second pipe's wearing surface 6 tearing or otherwise damaging the first pipe's sealing surface 10 is thus substantially eliminated.

The invention is in no way restricted to the embodiment described above but may be varied freely within the scopes of the claims. The invention may in alternative versions be used also in connection with other lines which form part of an exhaust system for a combustion engine, and in any pipelines where similar problems occur.

## Claims

1. A connection for a pipeline, the connection comprising a first connecting portion (1a) of a first pipe (1), a second connecting portion (2a) of a second pipe (2) which is connectable to the first connecting portion (1a), a wearing region (A) which allows a certain mutual mobility between the connecting portions (1a, 2a) when they are in a connected state, a sealing region (B) which prevents leakage between the connecting portions (1a, 2a) when they are in a connected state and a centreline (11) which extends centrally through the connection, the sealing region (B) comprises a radially inward facing sealing surface (10) of the first connecting portion (1a) and a seal means (8) which is situated on a radially outward facing bearing surface (7) of the second connecting portion (2a) and which has a radially outward facing surface being in contact with the sealing surface (10) in the sealing region (B) when the connecting portions (1a, 2a) are in the connected state, the wearing region (A) comprises a first wearing surface (5) of the first connecting portion (1a) and a second wearing surface (6) of the second connecting portion (2a) which are in mutual contact when the connecting portions (1a, 2a) are in the connected state, wherein the wearing region (A) is at a radial distance (r_{A}) from the centreline (11) which differs from the radial distance (r_{B}) from the sealing region (B) to the centreline (11), **characterised in that** the wearing region (A) is at a greater radial distance (r_{A}) from the centreline (11) than the radial distance (r_{B}) from the sealing region (B) to the centreline (11).

2. A connection according to claim 1, **characterised in that** the first wearing surface (5) and the second wearing surface (6) are so configured as to allow a certain mutual mobility between the pipes (1, 2) in an axial direction when the connecting portions (1a, 2a) are in a connected state.

3. A connection according to any one of the foregoing claims, **characterised in that** the first wearing surface (5) faces radially inwards and the second wearing surface (6) faces radially outwards.

4. A connection according to any one of the foregoing claims, **characterised in that** the seal means (8) is a sealing ring made of metal material.

5. A connection according to any one of the foregoing claims, **characterised by** comprising a connection between two pipes (1, 2) in an exhaust line.

## Patentansprüche

1. Verbindung für eine Rohrleitung, wobei die Verbindung umfasst: einen ersten Verbindungsabschnitt (1a) eines ersten Rohrs (1), einen zweiten Verbindungsabschnitt (2a) eines zweiten Rohrs (2), der mit dem ersten Verbindungsabschnitt (1a) verbindbar ist, einen Verschleißbereich (A), der eine bestimmte gegenseitige Beweglichkeit zwischen den Verbindungsabschnitten (1a, 2a) erlaubt, wenn sie sich in einem verbundenen Zustand befinden, einen Dichtungsbereich (B), der eine Leckage zwischen den Verbindungsabschnitten (1a, 2a) verhindert, wenn diese sich in einem verbundenen Zustand befinden, und eine Mittellinie (11), die sich mittig durch die Verbindung hindurch erstreckt,
wobei der Dichtungsbereich (B) eine radial nach innen gewandte Dichtungsoberfläche (10) des ersten Verbindungsabschnitts (1a) und ein Dichtmittel (8) umfasst, das an einer radial nach außen gewandten Lageroberfläche (7) des zweiten Verbindungsabschnitts (2a) angeordnet ist und eine radial nach außen gewandte Oberfläche aufweist, die mit der Dichtungsoberfläche (10) in dem Dichtungsbereich (B) in Kontakt steht, wenn die Verbindungsabschnitte (1a, 2a) sich in dem verbundenen Zustand befinden, wobei
der Verschleißbereich (A) eine erste Verschleißoberfläche (5) des ersten Verbindungsabschnitts (1a) und eine zweite Verschleißoberfläche (6) des zweiten Verbindungsabschnitts (2a) aufweist, die in gegenseitigem Kontakt stehen, wenn die Verbindungsabschnitte (1a, 2a) sich in dem verbundenen Zustand befinden, wobei sich der Verschleißbereich (A) in einem radialen Abstand (rA) von der Mittellinie (11) befindet, der sich von dem radialen Abstand (rB) zwischen dem Dichtungsbereich (B) und der Mittellinie (11) unterscheidet, **dadurch gekennzeichnet, dass** sich der Verschleißbereich (A) in einem größeren Abstand (rA) von der Mittellinie (11) befindet als der radiale Abstand (rB) zwischen dem Dichtungsbereich (B) und der Mittellinie (11).

2. Verbindung gemäß Anspruch 1, **dadurch gekennzeichnet, dass** die erste Verschleißoberfläche (5) und die zweite Verschleißoberfläche (6) derart eingerichtet sind, dass sie eine bestimmte gegenseitige Beweglichkeit zwischen den Rohren (1, 2) in eine axiale Richtung erlauben, wenn die Verbindungsabschnitte (1a, 2a) sich in einem verbundenen Zustand befinden.

3. Verbindung gemäß einem der vorhergehenden Ansprüche, **dadurch gekennzeichnet, dass** die erste Verschleißoberfläche (5) radial nach innen gewandt ist und die zweite Verschleißoberfläche (6) radial nach außen gewandt ist.

4. Verbindung gemäß einem der vorhergehenden Ansprüche, **dadurch gekennzeichnet, dass** das Dichtmittel (8) ein Dichtungsring ist, der aus Metallmaterial gefertigt ist.

5. Verbindung gemäß einem der vorhergehenden Ansprüche, **dadurch gekennzeichnet, dass** sie eine Verbindung zwischen zwei Rohren (1, 2) in einer Abgasleitung umfasst.

## Revendications

1. Raccord pour un pipeline, le raccord comprenant une première partie de liaison (1a) d'une première conduite (1), une seconde partie de liaison (2a) d'une seconde conduite (2) qui peut être raccordée à la première partie de liaison (1a), une région d'usure (A) qui permet une certaine mobilité mutuelle entre les parties de liaison (1a, 2a) lorsqu'elles sont à l'état raccordé, une région d'étanchéité (B) qui empêche les fuites entre les parties de liaison (1a, 2a) lorsqu'elles sont à l'état raccordé et un axe (11) qui s'étend centralement à travers le raccord, la région d'étanchéité (B) comprenant une surface d'étanchéité (10) de la première partie de liaison (1a) radialement tournée vers l'intérieur et un moyen d'étanchéité (8) qui est situé sur une surface d'appui (7) de la seconde partie de liaison (2a) radialement tournée vers l'extérieur et dont une surface radialement tournée vers l'extérieur est en contact avec la surface d'étanchéité (10) dans la région d'étanchéité (B) lorsque les parties de liaison (1a, 2a) sont à l'état raccordé, la région d'usure (A) comprenant une première surface d'usure (5) de la première partie de liaison (1a) et une seconde surface d'usure (6) de la seconde partie de liaison (2a) qui sont en contact mutuel lorsque les parties de liaison (1a, 2a) sont à l'état raccordé, la région d'usure (A) étant à une distance radiale (r_{A}) de l'axe (11) qui diffère de la distance radiale (r_{B}) entre la région d'étanchéité (B) et l'axe (11), **caractérisé en ce que** la région d'usure (A) est située à une distance radiale (r_{A}) de l'axe (11) plus grande que la distance radiale (r_{B}) entre la région d'étanchéité (B) et l'axe (11).

2. Raccord selon la revendication 1, **caractérisé en ce que** la première surface d'usure (5) et la seconde surface d'usure (6) sont configurées de façon à permettre une certaine mobilité mutuelle entre les conduites (1, 2) dans une direction axiale lorsque les parties de liaison (1a, 2a) sont à l'état raccordé.

3. Raccord selon l'une quelconque des revendications précédentes, **caractérisé en ce que** la première surface d'usure (5) est tournée radialement vers l'intérieur et la seconde surface d'usure (6) est tournée radialement vers l'extérieur.

4. Raccord selon l'une quelconque des revendications précédentes, **caractérisé en ce que** le moyen d'étanchéité (8) est une bague d'étanchéité en matériau métallique.

5. Raccord selon l'une quelconque des revendications précédentes, **caractérisé en ce qu'**il comprend un raccord entre deux conduites (1, 2) dans une conduite d'échappement.
